# EUROPEAN PATENT APPLICATION

(11) **EP 1 894 956 A1**
(43) Date of publication of application: **05.03.2008**
(21) Application number: 07016423.1
(22) Date of filing: 22.08.2007
(51) Int. Cl.: C08G 18/48, C08J 9/00, C08J 9/12

(54) **Low density rigid reinforced polyurethanes and a process for their production**

(30) Priority: 31.08.2006 US 513764
(71) Applicant: Bayer MaterialScience LLC, Pittsburgh PA 15205 (US)
(72) Inventor: Younes, Usama E., West Chester, PA 19380 (US)
(74) Representative: Klimiuk, Meike

(57) **Abstract**

Fiber-reinforced polyurethanes having densities no greater than 0.9 g/cc which are suitable for use as automotive components are produced from a polyurethane-forming reaction mixture in which carbon dioxide is dissolved in one or both of the reaction components. The amount of dissolved carbon dioxide is from 0.2 to 2.0 g/l. The isocyanate-reactive component is a polyol having a functionality of from 3 to 8 and a hydroxyl number of at least 600. Any fibrous material may be used but glass fiber, particularly glass fibers having lengths from 12.5 to 100 mm are particularly preferred.

## Description

### BACKGROUND OF THE INVENTION

The present invention relates to low density (i.e., density of less than 0.9 grams/cm³) rigid reinforced polyurethanes suitable for the production of molded articles, particularly composite articles and to a process for the production of such low density rigid reinforced polyurethanes.

Among the most common methods for reducing the density of polymeric materials such as polyurethanes is the use of a blowing agent. There are a large number of blowing agents which will produce polymers with decreased density. Examples of such known blowing agents include hydrochlorofluorocarbons ("HCFCs"), hydrofluorocarbons ("HFCs") and hydrocarbons such as pentane. However, because HCFC, HFC and hydrocarbon blowing agents increase the cost of polyurethane production and may have adverse environmental effects, water is a particularly preferred blowing agent.

Although the density of a polyurethane can be reduced by simply adding more water to the polyurethane-forming reaction mixture, the use of such added water can adversely affect the physical and mechanical properties of the polymer product. The additional water reacts with the isocyanate groups present in the reaction mixture to generate additional carbon dioxide and additional urea linkages thereby changing the isocyanate to hydroxyl reaction profile. One consequence of such changed reaction profile is a reduction in the gel time. While a faster gel time may be advantageous in some cases, faster gel times present problems where larger parts are being made by RIM (reaction injection molding), reinforced RIM or LFI (long fiber injection molding) processes.

Inclusion of liquid carbon dioxide in the polyurethane-forming reaction mixture has been proposed as a method for reducing density of polyurethane foams because of its solubility in the polyol component and friendliness to the environment. See, for example, U.S. Patent 6,458,861. However, liquid carbon dioxide vaporizes relatively suddenly so that the volume increases rapidly and large voids or bubbles form within the polyurethane foam.

Addition of carbon dioxide to the polyurethane-forming reaction mixture by dissolving the carbon dioxide in one of the reaction components, preferably the polyol component, is taught in U.S. Patent 6,458,861. However, the polyurethanes produced in this manner were flexible microcellular elastomers suitable for use in shoe sole applications. The problem of too rapid of a gel time is not encountered with such applications. Further, there is no teaching in U.S. Patent 6,458,861 with respect to production of larger or more rigid polyurethane articles, particularly fiber-reinforced polyurethanes.

U.S. Patent 6,887,911 discloses more rigid molded foam articles produced from polyurethane-forming reaction mixtures in which water or any of the other known blowing agents, including physical blowing agents such as nitrogen, air and carbon dioxide, may be employed. While the disclosed molded articles may be reinforced with a fibrous material, such reinforcement is not required. The fast demold times of from 43 to 45 seconds for 0.5 inch plaques reported in the Examples are not, however, sufficiently long for the production of larger articles by a RIM, reinforced RIM or LFI process.

### SUMMARY OF THE INVENTION

It has been surprisingly discovered that low density rigid reinforced polyurethanes having gel times and de-mold times which are long enough for the production of larger articles by a RIM, reinforced RIM, or LFI process may be prepared by dissolving CO₂ in the isocyanate-reactive component and/or the isocyanate component of the polyurethane-forming reaction mixture in a total amount of from 0.2 g/l to 2 g/liter. The isocyanate-reactive component is composed of at least one polyol having a functionality of from 3 to 8 and a hydroxyl number greater than 600.

### DETAILED DESCRIPTION OF THE INVENTION

The present invention relates to rigid reinforced polyurethanes having densities less than 0.9 g/cc, preferably less than 0.5 g/cc. These polyurethanes may be microcellular rigid or semi-rigid foams. The polyurethanes of the present invention may be produced by any of the known high pressure RIM (reaction injection molding), reinforced RIM or long fiber injection processes.

The present invention also relates to a polyurethane-forming system which is particularly useful in the production of the low density, rigid reinforced polyurethanes of the present invention with gel times sufficiently long that large parts having good surface characteristics may be produced. The gel times of the polyurethane-forming system of the present invention in a hot mold (i.e., a mold heated to a temperature of from 155 to 175°F (68.3 to 79.4°C)) are generally from 30 seconds to about 2 minutes. The demold time (generally three times the gel time) of the systems of the present invention generally range from about 90 seconds to 6 minutes in a hot mold.

The present invention is also directed to a process for the production low density polyurethanes, particularly, reinforced molded polyurethanes, in which carbon dioxide is dissolved in the isocyanate-reactive component in an amount of from 0.2 g/liter to 2 g/liter.

As used herein, the term "polyurethane" means a polymer with a structure containing predominantly urethane (-NH-CO-O-) linkages between repeating units which may also include minor amounts (i.e., less than 5%) of allophanate, biuret, carbodiimide, oxazolinyl, isocyanurate, uretdione, urea, and other linkages in addition to the urethane linkages.

Polyurethanes are prepared by reaction of an isocyanate component and an isocyanate-reactive component. In addition, various additives and processing aids such as surfactants, catalysts, stabilizers, pigments, fillers, etc., may be present. Suitable additives and processing aids are well known to those skilled in the art of polyurethane chemistry. A blowing agent may also be present. Water is one of the most commonly used blowing agents and is particularly preferred in the practice of the present invention.

The isocyanate component used in the polyurethane-forming "system" or "formulation" of the present invention may be any of the known diisocyanates, polyisocyanates, modified isocyanates, isocyanate-terminated prepolymers and combinations thereof. Examples of isocyanates which are readily available and frequently used in the production of polyurethanes and prepolymers used in the production of polyurethanes include: toluene diisocyanate (TDI), any of the TDI isomers and isomeric mixtures, particularly, 2,4-toluene diisocyanate (2,4-TDI); methylene diphenyl diisocyanate (MDI), any of the MDI isomers and isomeric mixtures, particularly, 4,4'-methylene diphenyl diisocyanate (4,4'-MDI); polymeric MDI; and modified isocyanates which include groups such as urethane, urea, allophanate, and particularly, carbodiimide groups. Any of the other known isocyanates may also be used, including mixtures of isocyanates. MDI and polymeric MDI are particularly preferred. Polymeric MDI is most preferred.

Any of the known isocyanate-reactive compounds having a functionality of from 2 to 8, preferably from 3 to 6, and a hydroxyl number greater than 60, preferably from about 200 to about 1200, most preferably from about 600 to about 1050 may be used to produce the polyurethanes in accordance with the present invention. Examples of such isocyanate-reactive compounds include: polyether polyols, polyester polyols and hybrid polyether-polyester polyols, polyhydroxy polycarbonates, polyhydroxy polyacetals, polyhydroxy polyacrylates, polyhydroxy polyester amides and polyhydroxy polythioethers. Polyester polyols, polyether polyols and polyhydroxy polycarbonates are preferred. Polyether polyols are most preferred.

Suitable polyester polyols include the reaction products of polyhydric alcohols and polybasic carboxylic acids. The polycarboxylic acids may be aliphatic, cycloaliphatic, aromatic and/or heterocyclic and they may be substituted, e.g. by halogen atoms, and/or unsaturated.

Polyether polyols which are suitable for use in the practice of the present invention include those obtained in known manner by reacting one or more starting compounds which contain reactive hydrogen atoms with alkylene oxides such as ethylene oxide, propylene oxide, butylene oxide, styrene oxide, tetrahydrofuran, epichlorohydrin or mixtures of these alkylene oxides. Suitable starting compounds containing reactive hydrogen atoms include polyhydric alcohols; 1,2,6-hexane triol; 1,2,4-butane triol; trimethylol ethane; pentaerythritol; mannitol; sorbitol; methyl glycoside; sucrose; phenol; isononyl phenol; resorcinol; hydroquinone; and 1,1,1- or 1,1,2-tris-(hydroxyl phenyl)-ethane.

While the isocyanate-reactive component of the present invention may include any polyol having a hydroxyl group functionality of at least 3 and a hydroxyl number of at least 60, the isocyanate-reactive component preferably used to produce the polyurethanes of the present invention includes: (a) at least one polyol, preferably, at least one polyether, polyester or hybrid polyether-polyester polyol having a functionality of approximately 3 and a hydroxyl value of from about 1035 to about 1065; and (b) at least one polyol, preferably, at least one polyether, polyester or hybrid polyether-polyester polyol having a functionality of approximately 4 and a hydroxyl value of from about 600 to 650, most preferably about 630. Additionally, polyols produced from mixed functional starters that have hydroxyl numbers greater than 600 and functionalities of from about 3 to about 8, preferably from about 3 to about 4, may optionally be used. Suitable polyether polyol starters include: glycerine, sugars, and amines. It is preferred that at least one polyol included in the isocyanate-reactive component of the present invention include an amine-initiated (either aromatic or aliphatic) polyol such as ethylene diamine. Most preferably, at least 50% by weight of the polyol(s) included in the isocyanate-reactive component is(arc) amine-initiated polyether polyol(s).

In addition to the required polyol having a functionality of from 3 to 8 and a hydroxyl number of at least 60, any of the other known isocyanate-reactive materials such as polyether and/or polyester polyols which have functionalities less than 3 or a hydroxyl number less than 60 may also be included in the isocyanate-reactive component, but when included, should be used in an amount less than 10% by weight of the total weight of the isocyanate-reactive component, preferably less than 5%.

The isocyanate-reactive component of the present invention also generally includes a chain extender, a surfactant and a catalyst. Suitable chain extenders, surfactants and catalysts are known to those skilled in the art.

The overall average equivalent weight of the polyol component, not considering chain extenders or any other additives or processing aids having isocyanate-reactive groups, is generally in the range of from about 30 Da to about 3000 Da, preferably, from 40 to 300, more preferably from about 30 Da to about 200 Da. The average theoretical functionality generally lies between 2 and 8, more preferably between 3 and 5.

In addition to polyether and polyester polyols and polyether-polyester hybrid polyols, "polymer polyols" may also be included in the isocyanate-reactive component. Polymer polyols are polyols which contain dispersed polymer particles. While numerous polymer polyols are theoretically possible, and a variety are commercially available, the most preferred polymer polyols are those prepared by the *in situ* polymerization of unsaturated molecules in a base polyol, often with the aid of an unsaturated "macromer" polyol. The unsaturated monomers are most commonly acrylonitrile and styrene, and the acrylonitrile/styrene copolymer particles are preferably stably dispersed in amounts of 10 to 60% by weight based on total polymer polyol weight, more preferably 20 to 50%, and most preferably 30 to 45%. Such polymer polyols are available commercially. For example, ARCOL® E850 polymer polyol containing 43% polyacrylonitrile/polystyrene solids is available from Bayer MaterialScience. Polymer polyols in which urea particles are dispersed such as Multranol 9151 polyol which is also commercially available from Bayer MaterialScience are also particularly suitable for use in the isocyanate-reactive component of the present invention. When included in the isocyanate-reactive component, the polymer polyol is treated as a triol for the purpose of calculating the diol/triol ratio.

Where a polymer polyol is included in the isocyanate-reactive component, it is possible that no chain extender will be needed and the chain extender may be omitted from the isocyanate-reactive component. A polymer polyol, if used, is generally included in the isocyanate-reactive component in an amount of less than 20% by weight (based on total weight of polyurethane). However, higher levels of polymer polyol may be used without any adverse effect upon product properties.

The hardness of the polyurethanes of the present invention makes them particularly suitable for use in long fiber injection processes.

A reinforcing material is also included in the polyurethane-forming reaction mixture. This reinforcing material is preferably in the form of fibers. Suitable fibers have an average length of from about 10 to about 100 mm, preferably, from about 12.5 to about 25 mm. Suitable fibrous materials include: glass fibers; carbon fibers; ceramic fibers; natural fibers such as flax, jute, and sisal; synthetic fibers such as polyamide fibers, polyester fibers and polyurethane fibers. The fibrous material is generally included in an amount of from about 10 to about 60 wt%, based on total weight of isocyanate-reactive component, preferably, from about 20 to about 50 wt.%, most preferably, from about 25 to about 40 wt.%.

Additives which may be added to the polyurethane formulations of the present invention are known to those skilled in the art and include surfactants, fillers, dyes, pigments, UV stabilizers, oxidative stabilizers, catalysts and the like.

Suitable fillers include: fumed or precipitated silica, quartz flour, diatomaceous earth, precipitated or ground calcium carbonate, alumina trihydrate and titanium dioxide.

A surfactant suitable for maintaining stability of the exceptionally fine cells is generally used. Examples of suitable commercially available surfactants include Dabco® SC5980, a silicone surfactant available from Air Products Co.; Dabco DC-5258, a silicone surfactant available from Air Products Co.; Dabco DC-5982, a modified polyether polysiloxane available from Air Products Co.; NIAX L1000 and NIAX L-5614, a silicone surfactant available from GE Silicones; Tegostab B8870, a surfactant which is commercially available from Goldschmidt; Tegostab B8905, a modified polyether polysiloxane which is commercially available from Goldschmidt; Tegostab B8315, a modified polyether polysiloxane which is commercially available from Goldschmidt; and Irgastab PUR 68, a mixture of esters and benzofuranone which is commercially available from Ciba Specialty Chemicals Corporation. Any of the other surfactants known to those skilled in the art would also be suitable.

Any of the conventional polyurethane catalysts (i.e., catalysts which promote the reaction of isocyanate and polyol) and catalysts which catalyze the isocyanate/water reaction may be used. These polyurethane catalysts are generally included in the isocyanate-reactive component in an amount of from about 0 to about 5 parts by weight, preferably from about 0.02 to about 1 parts by weight, based on total weight of polyol in the isocyanate-reactive component.

The polyurethane-forming components of the present invention are generally formulated at isocyanate indices of from about 90 to about 140, preferably from about 100 to about 120, and most preferably about 105.

The polyurethanes of the present invention are blown with carbon dioxide. A portion of that carbon dioxide is in the form of gas which is dissolved as a gas under pressure into at least one of the isocyanate or isocyanate-reactive components. The gaseous carbon dioxide can be dissolved into either or both of the isocyanate and isocyanate-reactive components. Preferably, it is dissolved into the isocyanate-reactive component. The remainder of the carbon dioxide is generated by the reaction of water present in the isocyanate-reactive component with the isocyanate during the polyurethane-forming reaction. The amount of carbon dioxide gas dissolved in one or both of the reaction components is generally from about 0.2 to about 2.0 g/l, preferably from about 0.5 to about 1.2 g/l. The amount of water included in the isocyanate-reactive component is generally from about 0 to about 1% by weight, preferably from about 0 to about 0.25% by weight.

If too much water is present in or added to the isocyanate-reactive component, the gel time is reduced and the working time in the open mold is also reduced.

The carbon dioxide gas to be dissolved in the reaction component(s) is introduced at modest pressure (i.e., a pressure of from about 1 to about 7 bars). This pressure is maintained on the tank using air or nitrogen. Sufficient CO₂ is introduced though a sparge tube directly into the liquid phase to maintain the desired concentration of CO₂. The CO₂ is introduced into the respective component storage tanks of the foam equipment, and given sufficient time to dissolve to the extent necessary. The amount dissolved may be measured by any convenient technique, including relative rates of diffusion through a membrane detector. The amount dissolved may range from 0.2 g/l to 2.0 g/l, preferably from 0.4 to 2.0 g/l, and more preferably from about 0.5 to about 1.2 g/l. The higher the amount of dissolved CO₂, the lower the component density. The carbon dioxide may be conveniently fed to the storage tank at 50 1b/in² pressure, for a time sufficient to dissolve the desired amount of carbon dioxide. Unless specified otherwise, the amount of dissolved CO₂ is the average concentration in g/l based on the amounts of the isocyanate and isocyanate-reactive components.

While any of the other known blowing agents such as the HFC, HCFC's and hydrocarbons such as pentane may be used in small amounts (e.g., less than 20% of total blowing agent composition) use of these known blowing agents is not preferred.

It is also within the scope of the present invention to include gases such as air and nitrogen in the vessel or chamber in which the polyurethane forming reaction is conducted. Use of such gases is particularly advantageous to control the concentration of CO₂ in the head space. The air or nitrogen in the head space maintains pressure, facilitates introduction of CO₂ as needed and makes it possible to control the amount of CO₂ that gets into solution. If too much CO₂ is introduced, the mixture becomes supersaturated with CO₂ resulting in large bubbles in the part, rather than the fine cell structure obtained when proper CO₂ concentration is maintained.

The two or more reactant streams, generally one stream of isocyanate-reactive component and one isocyanate stream may be combined by any suitable method for preparation of a molded polyurethane article, including mixing in a low pressure or a high pressure mixhead. It is necessary, when practicing the subject invention that the isocyanate-reactive component stream and/or isocyanate component stream already contain dissolved CO₂. Adding CO₂ only at the mix head or in a frother (e.g., an Oakes mixer) will not produce acceptable articles.

The process of the present invention is particularly advantageous in that a low density rigid polyurethane foam is produced without changing the reactivity of the material. Low density glass reinforced composites having densities as low as 0.5 g/cc at 40% glass by weight are produced and polyurethane foams with a fine cell structure but no large voids or bubbles are obtained. The polyurethane-forming reaction mixtures of the present invention may be processed by any of the known RIM, structural RIM and long fiber injection methods using any of the fillers or fibers known to be useful in such processes. Long fiber injection is a particularly preferred method. Apparatus and processing parameters for such long fiber injection are disclosed, e.g., in U.S. Published Patent Application 2004/0135280. The fiber-containing reaction mixture may be poured or otherwise placed in a mold. The contents of the mold may then be cured. The reinforced polyurethanes of the present invention may be fabricated using an open or closed mold.

In the LFI process, an open mold is charged from a mixhead in which fiberglass strands cut from the roving and the polyurethane reaction mixture are combined. The volume and length of the glass fibers can be adjusted at the mixhead. This process uses lower cost fiberglass roving rather than mats or preforms. The glass roving is preferably fed to a mixhead equipped with a glass chopper. The mixhead simultaneously dispenses the polyurethane reaction mixture and chops the glass roving as the mixhead is positioned over the mold and the contents of the mixhead are dispensed into the open mold. When the contents of the mixhead have been dispensed into the mold, the mold is closed, the reaction mixture is allowed to cure and the composite article is removed from the mold. The mold is generally maintained at a temperature of from about 120 to 190°F. The time needed to dispense the contents of the mixhead into the mold will usually be between 10 and 60 seconds. The mold will generally remain closed for a period of from about 1.5 to about 6 minutes to allow the glass fiber reinforced layer to cure.

Suitable molds may be made of steel, aluminum, or nickel. Molds having shear edges are particularly preferred because of their improved seal and simplification of the product trimming process.

The mold temperature is important for the proper curing of the reinforcing layer which is applied to the barrier coat. Suitable mold temperatures generally range from about 60 to about 90°C, preferably, from about 70 to about 80°C.

A mold release will generally be used to assure acceptable demolding of the composite article.

Having generally described this invention, a further understanding of the present invention can be obtained by reference to certain specific examples which are provided herein for purposes of illustration only and are not intended to be limiting.

### EXAMPLES

Materials useful in the production of fiber reinforced rigid polyurethane components in accordance with the present invention include:
- POLYOL A:: An amine-based tetrafunctional polyether polyol having an OH Number of approximately 630 mg KOH/g which is commercially available from Bayer MaterialScience LLC under the name Multranol 4050.
- POLYOL B:: An amine-initiated polyether tetrafunctional polyol having an OH Number of approximately 460 mg KOH/g which is commercially available from Bayer MaterialScience LLC under the name Multranol 4063.
- POLYOL C:: An amine-initiated polyether triol having an OH Number of approximately 700 mg KOH/g which is commercially available from Bayer Material Science LLC under the name Multranol 9138.
- POLYOL D:: A polypropylene oxide-based triol modified with ethylene having an OH Number of approximately 470 mg KOH/g which is commercially available from Bayer MaterialScience under the name Multranol 9158.
- POLYOL E:: A polypropylene oxide-based triol modified with ethylene oxide having an OH Number of approximately 380 mg KOH/g which is commercially available from Bayer MaterialScience under the name Multranol 4035.
- POLYOL F:: A polypropylene oxide-based hexol, having an OH Number of approximately 340 mg KOH/g which is commercially available from Bayer MaterialScience under the name Multranol 9171.
- POLYOL G:: A polypropylene oxide-based diol having an OH Number of approximately 264 mg KOH/g which is commercially available from Bayer MaterialScience under the name ARCOL PPG425.
- POLYOL H:: A polypropylene oxide-based triol having an OH Number of approximately 655 mg KOH/g which is commercially available from Bayer MaterialScience under the name ARCOL PPG LG-650.
- POLYOL I:: A polypropylene oxide-based triol having an OH Number of approximately 1050 mg KOH/g which is commercially available from Bayer MaterialScience under the name Multranol 9133.
- POLYOL J:: An amine-initiated polyether tetrol having an OH Number of approximately 395 mg KOH/g which is commercially available from Bayer MaterialScience under the name Multranol 8114.
- POLYOL K:: An amine-initiated polyether tetrol having an OH Number of approximately 360 mg KOH/g which is commercially available from Bayer MaterialScience under the name Multranol 8120.
- POLYOL L:: A polypropylene oxide-based triol having an OH Number of approximately 875 mg KOH/g which is commercially available from Bayer MaterialScience under the name Multranol 8108.
- EG:: Ethylene glycol.
- DEG:: Diethylene glycol.
- PU-1748:: A quaternary ammonium salt of the amide of tall oil and N,N'-dimethyl-1,3-diamine propane.
- MRA:: Mold release agent which is commercially available from Henkel under the name Loxiol G-71 S.
- CAT A:: NIAX C-177: a catalyst which is commercially available from GE.
- CAT B:: NIAX A-107: a catalyst which is commercially available from GE.
- CAT C:: A tin catalyst which is commercially available from Air Products under the name Dabco T12.
- CAT D:: An amine catalyst which is commercially available from Air Products under the name Dabco EG.
- SURF A:: A silicone surfactant which is commercially available from Air Products under the name DC5982.
- SURF B:: A silicone surfactant which is commercially available from GE under the name L1000.
- SURF C:: A silicone surfactant which is commercially available from Goldschmidt under the name B8870.
- SURF D:: DC 198, a surfactant which is commercially available from Air Products.
- NCO A:: An aromatic polymeric isocyanate based on diphenylmethane diisocyanate having an NCO content of 31% by weight and a viscosity at 25°C of 160 MPa which is commercially available from Bayer MaterialScience LLC under the name Mondur 645A.
- NCO B:: An aromatic isocyanate-terminated polymeric isocyanate based on diphenylmethane diisocyanate having an NCO content of 32% and a viscosity at 25°C of 40 MPa-s which is commercially available from Bayer MaterialScience under the name Bayfit 753X-A.
- NCO C:: An aromatic isocyanate-terminated prepolymer based on diphenylmethane diisocyanate having an NCO content of 23% and a viscosity at 25°C of 750 MPa-s which is commercially available under the name Mondur PF.
- NCO D:: A modified isocyanate-terminated aromatic isocyanate based on diphenylmethane diisocyanate having an NCO content of 23 and a viscosity at 25°C of 550 MPa-s which is commercially available from Bayer MaterialScience under the name Mondur MA 2300.
- GLASS:: Continuous glass roving available from Owens Coming under the designation ME1020.

### EXAMPLES 1-15

Formulations which may be useful for the production of composite articles in accordance with the above-described procedure are given in the following Tables 1-4. These examples are given to illustrate a variety of different, specific polyurethane-forming compositions which are suitable for the practice of the present invention. A different isocyanate or a mixture of isocyanates is employed in each Table. The amounts recited in each of Tables 1-4 are parts by weight with the exception of the % glass which is reported as weight percent, based on total weight of the polyurethane-forming mixture.

**TABLE 1**

| Ex. | 1 | 2 | 3 | 4 | 5 | 6 |
|---|---|---|---|---|---|---|
| POLYOL A | 60 | 60 | -- | 31 | 31 | 31 |
| POLYOL B | 20 | 20 | 32 | -- | -- | -- |
| POLYOL C | -- | -- | -- | -- | -- | 40 |
| POLYOL F | -- | -- | -- | 12 | 12 | -- |
| POLYOL H | -- | -- | -- | 12 | 12 | -- |
| POLYOL I | -- | -- | 25 | 17 | 17 | 17 |
| POLYOL J | 20 | 20 | 53 | -- | -- | -- |
| CAT A | 0.1 | 0.1 | | | | 0.16 |
| CAT B | 0.1 | 0.05 | | | | |
| SURF A | 1 | | | 1.5 | 1.5 | |
| SURF B | | | 1.5 | | | 1.5 |
| SURF C | | 1.0 | | | | |
| NCO A | 144 | 144 | 159 | 193 | 193 | 171.5 |
| Index | 110 | 110 | 110 | 104 | 104 | 110 |
| % Glass | 50 | 25 | 30 | 50 | 25 | 30 |
| Composite specific gravity, g/cc | 0.9 | 0.5 | 0.6 | 0.8 | 0.5 | 0.7 |

**TABLE 2**

| Ex. | 7 | 8 |
|---|---|---|
| POLYOL A | 15 | 31 |
| POLYOL C | -- | 35 |
| POLYOL D | 85 | -- |
| POLYOL E | 5 | -- |
| POLYOL F | -- | 12 |
| POLYOL H | -- | 12 |
| POLYOL I | -- | 17 |
| DEG | 1 | -- |
| CAT A | 0.2 | |
| SURF B | 1.5 | 1.5 |
| NCO B | 136 | 186 |
| Index | 110 | 108 |
| % Glass | 35 | 30 |
| Composite specific gravity, g/cc | 0.7 | 0.7 |

**TABLE 3**

| Ex. | 9 | 10 | 11 | 12 |
|---|---|---|---|---|
| POLYOL B | -- | -- | -- | 12 |
| POLYOL E | -- | 10 | -- | -- |
| POLYOL F | 10 | -- | 25 | 10 |
| POLYOL G | -- | -- | 25 | -- |
| POLYOL H | -- | 20 | 50 | -- |
| POLYOL I | 12 | -- | -- | -- |
| POLYOL K | 17 | -- | -- | 17 |
| POLYOL L | -- | 35 | -- | -- |
| EG | 1 | 4 | 4 | 1 |
| CAT A | 0.2 | | | |
| CAT B | | 0.1 | | |
| CAT C | -- | 0.05 | 0.2 | -- |
| CAT D | -- | -- | 2 | -- |
| SURF A | | | | 1.0 |
| SURF B | 1.0 | | | |
| SURF C | | | 1.5 | |
| SURF D | | 1.0 | | |
| H₂O | -- | 0.4 | -- | -- |
| NCO C | 79.8 | 179 | 206 | 79.8 |
| Index | 104 | 101 | 110 | 104 |
| % Glass | 30 | 30 | 35 | 35 |
| Composite sp gravity, g/cc | 0.8 | 0.5 | 0.6 | 0.8 |

**TABLE 4**

| Ex. | 13 | 14 | 15 |
|---|---|---|---|
| POLYOL D | -- | 25 | 25 |
| POLYOL F | 25 | -- | -- |
| POLYOL G | 25 | -- | -- |
| POLYOL H | 50 | -- | -- |
| POLYOL L | -- | 50 | 50 |
| EG | 4 | -- | -- |
| CAT C | 0.2 | 0.4 | 0.4 |
| CAT D | 2 | 2 | 2 |
| SURF A | 1.0 | | |
| SURF C | | 1.0 | 1.5 |
| NCO A | -- | 85.3 | 85.3 |
| NCO D | 206 | 85.3 | 85.3 |
| Index | 110 | 107 | 107 |
| % Glass | 30 | 20 | 45 |
| Composite specific gravity, g/cc | 0.6 | 0.4 | 0.8 |

### EXAMPLES 16-20

These examples are given to illustrate the effect of the amount of dissolved carbon dioxide upon the density, gel time and strength properties of the rigid polyurethane composite produced from a "typical" polyurethane-forming mixture.

In each of Examples 16-20, an amount of dissolved carbon dioxide varying from 0.4 to 1.4 g/1 of CO₂ was dissolved in the polyol component of a typical polyurethane-forming mixture. The mixture was then poured into a steel mold measuring 24"x24". The properties of the polyurethane composites produced are reported in TABLE 5.

**TABLE 5**

| EXAMPLE | | 16 | 17 | 18 | 19 | 20 |
|---|---|---|---|---|---|---|
| Glass content | wt. % | 30 | 30 | 30 | 30 | 30 |
| CO₂ concentration in Resin | g/l | 0 | 0.6 | 0.8 | 1 | 1.2 |
| Composite Density | g/cc | 1.33 | 1.12 | 0.96 | 0.8 | 0.64 |
| PU Density | g/cc | 0.93 | 0.78 | 0.67 | 0.56 | 0.45 |
| Gel at 170F* | seconds | 32 | 32 | 32 | 32 | 32 |
| Inst. Dart Impact | ft.lbf | 8.66 | 7.18 | 7.2 | 5.6 | 3.7 |
| Notched Izod Impact | ft-lb/in | 12.68 | 11.54 | 6.76 | 8.1 | 10.32 |
| Unnotched Izod Impact | ft-lbs/in | 19.278 | 14.678 | 13.876 | 10.58 | 8.456 |
| Flexural Strength | psi | 38390.8 | 35773.6 | 33354.2 | 15196 | 11066.8 |
| Flexural Modulus | psi | 1302088 | 1207804 | 1044759 | 576637.8 | 382836 |
| Tensile Strength | psi | 16331.2 | 10833 | 8593 | 6662.6 | 4430.8 |
| Tensile Modulus | psi | 1132373 | 861614.4 | 626538.6 | 524708.6 | 382997.6 |

Attempts to further reduce the density of the composite article by addition of from 0.2 to 0.5 % water in the resin, the gel time was reduced from 32 to 28-25 seconds and the resulting product had poor surface quality.

Having now fully described the invention, it will be apparent to one of ordinary skill in the art that many changes and modifications can be made thereto without departing from the spirit or scope of the invention as set forth herein. The terms "a" and "an" when used in the claims, mean "one or more" unless otherwise indicated. The terms "major" and majority" mean 50% or more on a weight or mol basis as the case may be.

## Claims

1. A low density fiber-reinforced polyurethane comprising the reaction product of
(1) an isocyanate-reactive component comprising:
a) a polyol having a hydroxyl group functionality of from about 3 to about 8 and a hydroxyl number greater than 200,
b) a catalyst,
c) a surfactant,
d) optionally, a crosslinking agent,
e) optionally, water, and
f) optionally, dissolved carbon dioxide, and
(2) an isocyanate component comprising:
a) an organic polyisocyanate, and
b) optionally, dissolved carbon dioxide, and
(3) a) a fibrous reinforcing material,
in which dissolved carbon dioxide is present in at least one of the isocyanate-reactive component or the isocyanate component and the total amount of carbon dioxide present in the isocyanate-reactive and/or isocyanate component is from 0.3 to 2.0 grams per liter.

2. The polyurethane of Claim 1 in which more than one polyol having a hydroxyl group functionality of from about 3 to about 8 and a hydroxyl number greater than 200 is present as component a) of the isocyanate-reactive component.

3. The polyurethane of Claim 2 in which a combination of a trifunctional polyol and a tetrafunctional polyol is used as component a) of the isocyanate-reactive component.

4. The polyurethane of Claim 3 in which the trifunctional polyol is present in an amount of at least about 50% by weight, based on total weight of triol plus tetrol.

5. The polyurethane of Claim 1 in which water is present in the isocyanate-reactive component.

6. The polyurethane of Claim 1 in which the isocyanate-reactive component includes at least one polyol having a hydroxyl functionality of from about 3 to about 4.

7. The polyurethane of Claim 1 in which a crosslinking agent is present in the isocyanate-reactive component.

8. The polyurethane of Claim 1 in which the isocyanate-reactive component includes at least one polyol having an average hydroxyl number of from 200 to 600 and a crosslinking agent is present.

9. The polyurethane of Claim 1 in which the isocyanate-reactive component includes at least one polyol having a hydroxyl number of from 600 to 1200.

10. The polyurethane of Claim 1 in which the isocyanate-reactive component includes a mixture of a polyether triol and a polyether tetrol.

11. The polyurethane of Claim 1 in which the isocyanate-reactive component includes at least one polyol which is a polyester polyol.

12. The polyurethane of Claim 1 in which the isocyanate-reactive component includes at least one polyether polyol prepared from mixed starters.

13. The polyurethane of Claim 1 in which the total amount of dissolved carbon dioxide included in the isocyanate-reactive component and/or isocyanate component is from 0.2 to 2.0 grams per liter.

14. The polyurethane of Claim 1 in which the isocyanate-reactive component includes up to 50% by weight, based on total weight of polyol, of a polyol having a functionality less than 3.

15. The polyurethane of Claim 1 in which the fibrous reinforcing material is glass fiber.

16. The polyurethane of Claim 15 in which the glass fiber has an average length of from 12.5 to 100 mm.

17. The polyurethane of Claim 15 in which the glass fiber is present in an amount of from 15 to 55% by weight, based on total weight of isocyanate component plus isocyanate-reactive component.

18. A glass reinforced polyurethane composite having a density of from 1.1 to 0.4 g/cc comprising the reaction product of
(1) an isocyanate-reactive component comprising:
a) a polyol having a hydroxyl group functionality of from about 3 to about 8 and a hydroxyl number greater than 200,
b) a catalyst,
c) a surfactant,
d) optionally, a crosslinking agent,
e) optionally, water, and
f) optionally, dissolved carbon dioxide, and
(2) an isocyanate component comprising:
a) an organic polyisocyanate, and
b) optionally, dissolved carbon dioxide, and
(3) a) from 5 to 50% by weight, based on total weight of (1) plus (2) of glass fiber,
in which dissolved carbon dioxide is present in at least one of the isocyanate-reactive component or the isocyanate component and the total amount of carbon dioxide present in the isocyanate-reactive and/or isocyanate component is from 0.3 to 2.0 grams per liter.

19. The composite of Claim 18 in which the glass fiber has a length of from 12.5 to 100 mm.

20. A system for the production of a low density fiber-reinforced polyurethane comprising:
(1) an isocyanate-reactive component comprising:
a) a polyol having a hydroxyl group functionality of from about 3 to about 8 and a hydroxyl number greater than 200,
b) a catalyst,
c) a surfactant,
d) optionally, a crosslinking agent,
e) optionally, water, and
f) optionally, dissolved carbon dioxide, and
(2) an isocyanate component comprising:
a) an organic polyisocyanate, and
b) optionally, dissolved carbon dioxide, and
(3) a)a fibrous reinforcing material,
in which dissolved carbon dioxide is present in at least one of the isocyanate-reactive component or the isocyanate component and the total amount of carbon dioxide present in the isocyanate-reactive and/or isocyanate component is from 0.3 to 2.0 grams per liter.

21. The system of Claim 20 in which more than one polyol having a hydroxyl group functionality of from about 3 to about 8 and a hydroxyl number greater than 200 is present as component a) of the isocyanate-reactive component.

22. The system of Claim 21 in which a combination of a trifunctional polyol and a tetrafunctional polyol is used as component a) of the isocyanate-reactive component.

23. The system of Claim 22 in which the trifunctional polyol is present in an amount of at least about 50% by weight, based on total weight of triol plus tetrol.

24. The system of Claim 20 in which water is present in the isocyanate-reactive component.

25. The system of Claim 20 in which the isocyanate-reactive component includes at least one polyol having a hydroxyl functionality of from about 3 to about 4.

26. The system of Claim 20 in which a crosslinking agent is present in the isocyanate-reactive component.

27. The system of Claim 20 in which the isocyanate-reactive component includes at least one polyol having an average hydroxyl number of from 200 to 600 and a crosslinking agent is present.

28. The system of Claim 20 in which the isocyanate-reactive component includes at least one polyol having a hydroxyl number of from 600 to 1200.

29. The system of Claim 20 in which the isocyanate-reactive component includes a mixture of a polyether triol and a polyether tetrol.

30. The system of Claim 20 in which the isocyanate-reactive component includes at least one polyol which is a polyester polyol.

31. The system of Claim 20 in which the isocyanate-reactive component includes at least one polyether polyol prepared from mixed starters.

32. The system of Claim 20 in which the total amount of dissolved carbon dioxide included in the isocyanate-reactive component and/or isocyanate component is from 0.2 to 2.0 grams per liter.

33. The system of Claim 20 in which the isocyanate-reactive component includes up to 50% by weight, based on total weight of polyol, of a polyol having a functionality less than 3.

34. The system of Claim 20 in which the fibrous reinforcing material is glass fiber.

35. The system of Claim 34 in which the glass fiber has an average length of from 12.5 to 100 mm.

36. The system of Claim 34 in which the glass fiber is present in an amount of from 15 to 55% by weight, based on total weight of isocyanate component plus isocyanate-reactive component.
